# EUROPEAN PATENT SPECIFICATION

(11) **EP 3 819 234 B1**
(45) Date of publication and mention of the grant of the patent: **30.08.2023**
(21) Application number: 20205956.4
(22) Date of filing: 05.11.2020
(51) Int. Cl.: B65D 75/32, A23G 9/50, B65D 75/54, B65D 85/78

(54) **METHOD OF PACKAGING AN EDIBLE PRODUCT AND A UNIT OF PACKAGED PRODUCT**
VERFAHREN ZUM VERPACKEN EINES ESSBAREN PRODUKTS UND EINHEIT DES VERPACKTEN PRODUKTS
PROCÉDÉ D'EMBALLAGE D'UN PRODUIT COMESTIBLE ET UNITÉ DE PRODUIT EMBALLÉ

(30) Priority: 06.11.2019 IT 201900020482
(43) Date of publication of application: 12.05.2021
(73) Proprietor: Unifill S.r.l., 41030 Bomporto (MO) (IT)
(72) Inventor: MONTI, Moreno, 40050 Monteveglio (BO) (IT); PARINI, Massimiliano, 44040 Alberone di Cento (FE) (IT)
(74) Representative: Provvisionato, Paolo

(56) References cited:
- WO-A1-95/05749
- DE-U1- 8 804 555
- GB-A- 732 026
- US-A- 4 478 386

## Description

### Field of invention

This invention concerns a method of packaging an edible product. The invention also concerns a unit of a packaged edible product.

The packaging method can be used to give a desired shape to food products such as ice cream, an ice-cold drink, sweets, cheese, by pouring, or injecting, a syrup, or in general a fluid mixture, in a mould, and with its subsequent solidification.

The invention was developed with particular attention to the packaging of an edible product with an insert or handle to allow the product to be held while it is being consumed.

### Background

The known technique includes methods of forming edible products which include the pouring of a mixture, be it a syrup, liquid or paste, into a mould with its subsequent solidification by cooling. In those cases where the finished products contain an insert, in the form of a stick or handle to allow the product to be held while it is being consumed, as in the case of ice cream or popsicles for example, the insert is placed in the mould, generally during or after the pouring of the mixture and always before its final solidification. Solutions of this type are for example described in the documents of the prior art US 2759831, US 4001440 and WO 93/21087.

The positioning of the insert is not easy, in particular because it requires complex mechanisms to hang the insert in the cavity of each mould. Moreover, often during casting the portion of the insert protruding from the product is covered with a little liquid or syrup mixture, causing an unpleasant and unhygienic contact of the product with the hand holding the insert while the product is being consumed.

Document WO 95/05749 of the same applicant describes a process in which a pack is formed with a pouch portion and a tubular portion communicating with each other, with a handle extending along the tubular portion and from there into the pouch portion. The pouch portion is filled with an edible fluid through an opening in the pack, which is then sealed. The special feature of this solution is that the handle is inserted into the tubular portion after forming the tubular portion but before filling the pouch portion.

The solution described in WO 95/05749 has proved satisfactory in solving the problems of the known technique related to the correct positioning of the insert or handle. However, this solution is only effective in the case of inserts that have a regular shape, without undercuts and for example cylindrical, of the handle portion that is inserted into the tubular portion in the packaging. As there is an increasing need in the packaged product sector to customise the handle portion of the insert, the need has arisen to provide a solution that allows the limits of the known technique to be overcome.

In the method described in WO 95/05749, a problem is also encountered for the manufacture of packaged products with flat inserts of the stick or slat type. In order to avoid that during casting the portion of the insert protruding from the product is covered with a little liquid mixture, WO 95/05749 teaches how to make a sealing ring on the stick. This solution effectively limits the flexibility in the manufacture of sticks and associated packaging by requiring the manufacturer to adopt a specific insert configuration that includes the sealing ring, which is not always feasible or acceptable to the consumer.

DE 8804555 U1 and US 4478386 A both disclose bags with some compartments suitable for being filled with water to be frozen to form popsicles or sorbets. In the bags, a number of flat sticks are placed which remain partially embedded in the mass of the ice lolly while their other ends are intended as handles for holding the frozen product for consumption. The bags are made of two webs of foil which are welded or glued together uninterruptedly in a band at one side of the bag corresponding to the holding parts of the sticks, which thus stay blocked within the bags.

### Summary of the invention

One purpose of this invention is to provide a method for packaging edible products with an insert of any shape. Another purpose of the invention is to provide a product packaged with an insert of any shape.

Within these purposes, the objective of making a packaged product that can use a flat or thin insert without the risk of the product covering part of the handle portion of the insert or handle is particularly important.

According to one aspect of the invention, a packaging process of an edible product according to appended claim 1 described in which a package comprising a pouch portion and a pocket portion is formed. Between these two portions of the package, that is the pouch portion and the pocket portion, a passage is formed in which a handle is inserted, so that it is arranged with an anchoring portion in the pocket portion of the package, and with a grip portion into the pouch portion of the package. The method involves tightly sealing the package around the insert or handle in an area substantially at, or adjacent to the passage where the insert is inserted. In this way a tight seal is obtained between the pouch portion and the pocket portion, substantially narrowing the passage around the insert. The method then involves filling the pouch portion of the package with an edible fluid through an opening in the package, which is then welded and/or sealed when the filling is complete.

In a preferred aspect, the package is sealed around an intermediate portion of the handle, that is, a portion between the anchor portion and the grip or handle portion.

According to the invention, the package is formed by joining together a pair of opposing shells, preferably of plastic material. The sealing around the handle is carried out by hot compressing the two shells by means of a mould. The two opposing shells are preferably sealed together in a separable way along a peripheral edge. It is possible to form the pouch portion and the pocket portion by blowing moulding.

According to the invention in accordance with claim 5, a packaged product unit including a package is described. The package includes a pouch portion and a pocket portion. Between the pouch portion and the pocket portion there is a passage through which an insert or handle is disposed. The insert or handle is placed partially in the pocket portion and partially in the pouch portion. An edible product is placed in the pouch portion. At or near the passageway, the package is sealed around the insert or handle to provide a seal between the pouch portion and the pocket portion.

### Brief description of the drawings

Further features and advantages will result from the following detailed description of a preferred embodiment, with reference to the attached drawings, given as a nonlimiting example:
- Figure 1 is a perspective view of a packaged product unit incorporating features of the present invention;
- figure 2 is a cross-section of the packaged product unit according to the plane II-II of figure 1; and
- Figure 3 is a longitudinal section of the packaged product unit according to line III-III of Figure 2;

### Detailed description

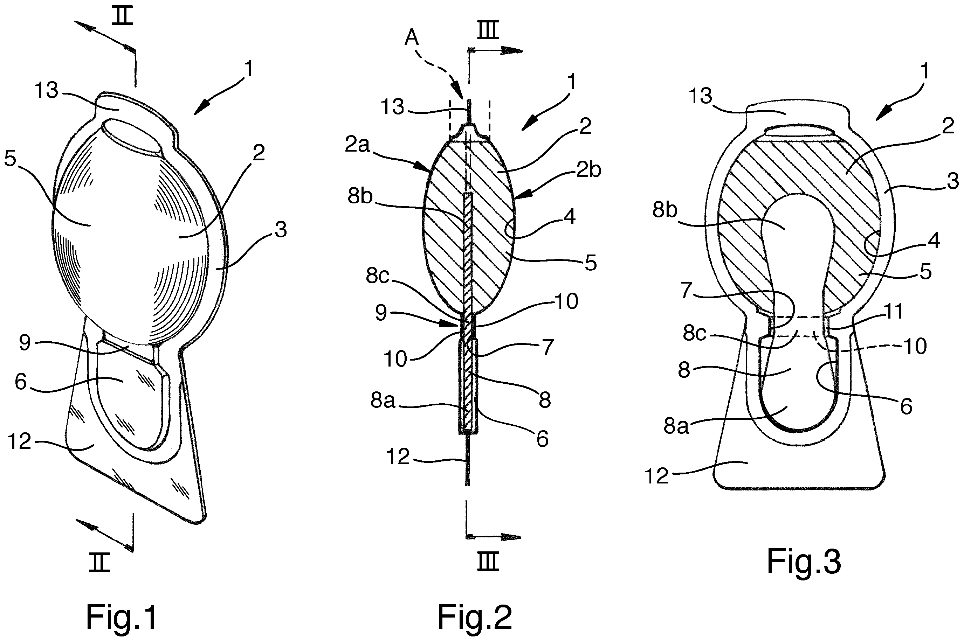

Figures 1 to 3 show the packaged product unit 1, that is, the product in its package 2. Package 2, which also functions as a mould, is made of two opposing shells 2a, 2b, for example symmetrically opposed shells of any shape, preferably made of plastic.

Opposed shells 2a, 2b can be joined together by a continuous sealing 3, preferably hot sealing, along part of their outer edge, for example in the longitudinal median plane of the package 2.

The shells 2a, 2b define an inner cavity 4, with a pouch portion 5 which is large enough to hold the product. The inner cavity 4 also includes a pocket portion 6, adjacent to the pouch portion 5. Between the pouch portion 5 and the pocket portion 6, there is a passage 7 through which passes a handle 8, for example a stick, slat or similar. The handle 8 includes a grip portion 8a which is placed in the pocket portion 6 of the inner cavity 4. On the opposite side of the grip portion 8a, the handle 8 includes an anchor portion 8b which is placed in the pouch portion 5 of the inner cavity 4. The anchor portion 8b is incorporated into the solidified product so that it can be consumed in use by holding it from the grip portion 8a of the handle 8.

At passage 7 there is an intermediate sealing section 9 where the package 2 is in close contact with the handle 8 to prevent communication between the pouch portion 5 and the pocket portion 6 of the inner cavity 4. In particular, in the embodiment illustrated in the figures, the sealing section 9 is substantially transversal to the extension of the handle 8. The sealing section 9 is very short in the longitudinal direction, that is, in the direction of the length of the handle 8, so that it tightly seals only a limited, intermediate portion 8c of the handle 8 and leaves the grip portion 8a substantially free inside the pocket portion 6 of the inner cavity 4. The sealing section 9 includes two depressions 10 on the two shells 2a, 2b on both sides of the handle 8, so that the shells 2a, 2b rest against the flat surface of the handle 8. The sealing section 9 also includes two lateral junction zones 11 which reduce the width of the passage 7 to the width of the handle 8 in its intermediate zone 8c between the grip portion 8a and the anchor portion 8b, compared to the original width of passage 7 made wide enough to allow the introduction of the grip portion 8a into the pocket portion 6 of the inner cavity 4 of pack 2.

Outside the continuous sealing 3, the package 2 may have opening means in an opening zone 12. In the opening zone 12, the two opposing shells 2a, 2b which form the package 2 are not welded together. In the opening zone 12, two flaps are therefore formed that are next to each other but can be easily separated and can therefore be grasped and pulled away from each other by a user who wants to open the package 2 in order to consume the product. However, it must be understood that the opening means, preferably in the form of flaps, can be provided at any section of the continuous sealing 3.

In one section of the continuous sealing 3, on the opposite side of the opening zone 12, there is an upper section 13 of the continuous sealing 3. The upper section 13 of the seal is for example flat and is sealed after the fluid product has been introduced into the inner cavity 4 through an opening A, so that the package for packaged products 2 is finally completely sealed.

The handle 8 may include an elongated flat slat, such as the one shown in the figures, which may have a profile of any shape, and in particular may be wider in the grip portion 8a than in the intermediate area 8c which is placed in the passage 7.

To make the packaged product unit 1, the package 2 is prepared by sealing together two sheets of plastic material along the continuous seal 3 with the exception of the opening zone 12 which remains open to form opening A. At this stage, continuous sealing 3 may have a central narrowing portion which forms the passage 7. In any case, the passage 7 initially presents a width such that the grip portion 8a of the handle 8 can be easily inserted into the pocket portion 6 of the inner cavity 4, after the latter has been formed for example by blowing air into the package 2 through opening A.

When the handle 8 is placed into the inner cavity 4, with its grip portion 8a placed in the pocket portion 6 and the anchor portion 8b placed in the pocket portion 5, the tightly sealing section 9 is made all around the intermediate area 8c of handle 8. The sealing section 9 is made by applying a hot compression, by means of a mould configured for this purpose. After the sealing section 9 has been made, so that the passage 7 is completely occupied by the handle 8 and there is no more communication between the pouch portion 5 and the pocket portion 6, a fluid product is poured through the opening A to fill the pouch portion 5. The continuous sealing 3 is then completed with the closing of opening A by providing the upper sealing section 13.

Naturally, without prejudice to the principle of the invention, the embodiments and the details of production may vary widely with respect to what has been described and illustrated, without leaving the scope of the present invention, which is defined by the appended claims.

## Claims

1. A method for packaging an edible product, comprising:
forming a package (2) for packaged products comprising a pouch portion (5) and a pocket portion (6), with a passage (7) between the two portions (5, 6),
inserting a handle (8) in the passage (7) so that the handle (8) is arranged with a grip portion (8a) thereof in the pocket portion (6) and with a different, anchor portion (8b) thereof in the pouch portion (5),
tightly sealing the package (2) around the handle (8) at, or adjacent to the passage (7), to make a tight seal between the pouch portion (5) and the pocket portion (6),
filling the pouch portion (5) with an edible fluid through an opening (A) in the pouch portion (5) of said package (2) for packaged products, and
sealing said opening (A), wherein the package (2) for packaged products is formed by joining together a pair of opposite shells (2a, 2b), the sealing around the handle (8) being carried out by hot compression of the pair of opposite shells (2a, 2b) by means of a mould.

2. A method according to claim 1, wherein the package (2) is sealed around an intermediate portion (8c) of the handle (8).

3. A method according to claim 1, wherein the pair of opposite shells (2a, 2b) are sealed together in a separable manner along a peripheral edge (3).

4. A method according to claim 1, wherein the pouch portion (5) and the pocket portion (6) are formed by blow moulding.

5. A packaged product unit comprising a package (2) for packaged products formed by joining together a pair of opposite shells (2a, 2b), the package (2) for packaged products comprising a pouch portion (5) and a pocket portion (6), with a passage (7) between the two portions (5, 6), through which passage a handle (8) passes so that a grip portion thereof (8a) is disposed within the pocket portion (6) and an anchor portion thereof (8b) is disposed within the pouch portion (5), an edible product being arranged in the pouch portion (5), an area (8c) of the package at, or adjacent to the passage (7) being tightly sealed around the handle (8) to make a tight seal between the pouch portion (5) and the pocket portion (6), the handle (8) having a length which defines a longitudinal direction, a sealing section (9) being substantially transversal to the extension of the handle (8) and very short in the longitudinal direction so that it tightly seals only a limited, intermediate portion (8c) of the handle (8) and leaves the grip portion (8a) substantially free inside the pocket portion (6), the sealing section (9) including two depressions (10) on the two shells (2a, 2b) on both sides of the handle (8), so that the pair of opposite shells (2a, 2b) rest against a flat surface of the handle (8), the sealing section (9) also including two lateral junction zones (11) which reduce the width of the passage (7) to the width of the handle (8) in its intermediate zone (8c) between the grip portion (8a) and the anchor portion (8b).

## Patentansprüche

1. Verfahren zum Verpacken eines essbaren Produkts, umfassend:
Bilden einer Verpackung (2) für verpackte Produkte, die einen Beutelabschnitt (5) und einen Taschenabschnitt (6) mit einem Kanal (7) zwischen den beiden Abschnitten (5, 6) umfasst,
Einfügen eines Griffs (8) in den Kanal (7) derart, dass der Griff (8) mit seinem Griffteil (8a) in dem Taschenabschnitt (6) und mit seinem anderen, nämlich dem Verankerungsteil (8b) in dem Beutelabschnitt (5) angeordnet ist,
dichtes Verschließen der Verpackung (2) rund um den Griff (8) an dem oder in der Nähe des Kanals (7), um zwischen dem Beutelabschnitt (5) und dem Taschenabschnitt (6) für stabile Abdichtung zu sorgen,
Füllen des Beutelteils (5) mit einer verzehrbaren Flüssigkeit durch eine Öffnung (A) in dem Beutelabschnitt (5) der Verpackung (2) für verpackte Produkte und
dichtes Verschließen der Öffnung (A),
wobei die Verpackung (2) für verpackte Produkte gebildet wird durch das Verbinden eines Paares einander gegenüberliegender Schalen (2a, 2b) miteinander, wobei das dichte Verschließen rund um den Griff (8) durch Warmpressen des Paares der einander gegenüberliegenden Schalen (2a, 2b) mittels eines Gesenks erfolgt.

2. Verfahren nach Anspruch 1, wobei die Verpackung (2) rund um einen Zwischenabschnitt (8c) des Griffs (8) versiegelt wird.

3. Verfahren nach Anspruch 1, wobei das Paar einander gegenüberliegender Schalen (2a, 2b) entlang einer Umfangskante (3) separierbar versiegelt wird.

4. Verfahren nach Anspruch 1, wobei der Beutelabschnitt (5) und der Taschenabschnitt (6) durch Blasformen hergestellt werden.

5. Verpackte Produkteinheit, umfassend eine Verpackung (2) für verpackte Produkte, die gebildet wird durch Verbinden eines Paares einander gegenüberliegender Schalen (2a, 2b), wobei die Verpackung (2) für verpackte Produkte einen Beutelabschnitt (5) und einen Taschenabschnitt (6) mit einem zwischen den beiden Abschnitten (5, 6) vorgesehenen Kanal (7) umfasst, durch welchen ein Griff (8) derart hindurchgeführt ist, dass ein Griffteil (8a) desselben in dem Taschenabschnitt (6) und ein Verankerungsteil (8b) desselben in dem Beutelabschnitt (5) angeordnet ist, wobei ein essbares Produkt in dem Beutelabschnitt (5) angeordnet ist, wobei der Griff (8) eine Länge hat, die eine Längsrichtung definiert, wobei ein Bereich (8c) der Verpackung an dem oder in der Nähe des Kanals (7) rund um den Griff (8) zur Herstellung einer stabilen Abdichtung zwischen dem Beutelabschnitt (5) und dem Taschenabschnitt (6) dicht versiegelt ist, wobei der Griff (8) wobei ein Versiegelungsabschnitt (9) im Wesentlichen transversal zur Erstreckung des Griffs (8) ist und in der Längsrichtung sehr kurz ist, so dass er lediglich ein begrenzten Zwischenbereich (8c) des Griffs (8) dicht verschließt und den Griffabschnitt (8a) in dem Taschenabschnitt (6) im Wesentlichen freilässt, wobei der Versiegelungsabschnitt (9) beidseits des Griffs (8) zwei Vertiefungen (10) an den beiden Schalen (2a, 2b) aufweist, so dass das Paar einander gegenüberliegender Schalen (2a, 2b) an einer ebenen Fläche des Griffs (8) anliegt, wobei der Versiegelungsabschnitt (9) auch zwei seitliche Verbindungsbereiche (11) aufweist, die die Breite des Kanals (7) auf die Breite des Griffs (8) in seinem Zwischenbereich (8c) zwischen dem Griffabschnitt (8a) und dem Verankerungsabschnitt (8b) verringern.

## Revendications

1. Procédé d'emballage d'un produit comestible, comprenant :
la formation d'un emballage (2) pour produits emballés comprenant une partie sachet (5) et une partie poche (6), avec un passage (7) entre les deux parties (5, 6),
l'insertion d'une poignée (8) dans le passage (7) de telle sorte que la poignée (8) est agencée avec une partie préhension (8a) de celle-ci dans la partie poche (6) et avec une partie ancrage (8b) de celle-ci différente dans la partie sachet (5),
le scellage hermétique de l'emballage (2) autour de la poignée (8) au niveau du passage (7) ou de façon adjacente à celui-ci, pour réaliser un joint étanche entre la partie sachet (5) et la partie poche (6),
le remplissage de la partie sachet (5) avec un fluide comestible à travers une ouverture (A) dans la partie sachet (5) dudit emballage (2) pour produits emballés, et
le scellage de ladite ouverture (A),
dans lequel l'emballage (2) pour produits emballés est formé en assemblant ensemble une paire de coques opposées (2a, 2b), le scellage autour de la poignée (8) étant réalisé par compression à chaud de la paire de coques opposées (2a, 2b) au moyen d'un moule.

2. Procédé selon la revendication 1, dans lequel l'emballage (2) est scellé autour d'une partie intermédiaire (8c) de la poignée (8).

3. Procédé selon la revendication 1, dans lequel les deux coques opposées (2a, 2b) sont scellées ensemble d'une manière séparable le long d'un bord périphérique (3).

4. Procédé selon la revendication 1, dans lequel la partie sachet (5) et la partie poche (6) sont formées par moulage par soufflage.

5. Unité de produit emballé comprenant un emballage (2) pour produits emballés (2a, 2b) formée en réunissant une paire de coques opposées (2a, 2b), l'emballage (2) pour produits emballés comprenant une partie sachet (5) et une partie poche (6), avec un passage (7) entre les deux parties (5, 6), passage à travers lequel passe une poignée (8) de sorte qu'une partie préhension de celle-ci (8a) est disposée à l'intérieur de la partie poche (6) et qu'une partie ancrage de celle-ci (8b) est disposée à l'intérieur de la partie sachet (5), un produit comestible étant agencé dans la partie sachet (5), une zone (8c) de l'emballage au niveau du passage (7) ou adjacente à celui-ci étant scellée hermétiquement autour de la poignée (8) pour former un joint étanche entre la partie sachet (5) et la partie poche (6), la poignée (8) ayant une longueur qui définit une direction longitudinale, une section d'étanchéité (9) étant sensiblement transversale à l'extension de la poignée (8) et très courte dans la direction longitudinale de sorte qu'elle ne scelle hermétiquement qu'une partie intermédiaire limitée (8c) de la poignée (8) et laisse la partie préhension (8a) sensiblement libre à l'intérieur de la partie poche (6), la section d'étanchéité (9) incluant deux creux (10) sur les deux coques (2a, 2b) sur les deux côtés de la poignée (8), de sorte que les deux coques opposées (2a, 2b) reposent contre une surface plane de la poignée (8), la section d'étanchéité (9) incluant également deux zones de jonction latérales (11) qui réduisent la largeur du passage (7) à la largeur de la poignée (8) dans sa zone intermédiaire (8c) entre la partie préhension (8a) et la partie ancrage (8b).
